# EUROPÄISCHE PATENTSCHRIFT

(11) **EP 2 862 613 B1**
(45) Veröffentlichungstag und Bekanntmachung des Hinweises auf die Patenterteilung: **07.03.2018**
(21) Anmeldenummer: 14182440.9
(22) Anmeldetag: 27.08.2014
(51) Int. Cl.: B01D 46/00, B01D 46/24

(54) **Filtersystem mit Dichtung**
Filter system with seal
Système de filtre avec joint

(30) Priorität: 02.09.2013 DE 102013014494
(43) Veröffentlichungstag der Anmeldung: 22.04.2015
(73) Patentinhaber: MANN+HUMMEL GmbH, 71636 Ludwigsburg (DE)
(72) Erfinder: Kaufmann, Michael, 67149 Meckenheim (DE); Ruhland, Klaus-Dieter, 67149 Meckenheim (DE)

(56) Entgegenhaltungen:
- EP-A1- 0 791 387
- US-A1- 2009 071 111
- US-A1- 2011 083 409

## Beschreibung

### Technisches Gebiet

Die Erfindung betrifft ein Filtersystem mit einer Dichtung, insbesondere zur Verwendung als Luftfilter einer Brennkraftmaschine.

### Stand der Technik

Aus der US 2009/071111 A1 ist ein Kurbelgehäuseentlüftungsfilter bekannt, welcher von oben oder unten gewartet werden kann. Aus der EP 791 387 A1 ist ein Filtergehäuse mit einem abnehmbaren Deckel bekannt, welcher eine Dichtung aufweist. Aus der US2011083409A1 ist ein Filtersystem bekannt, bei dem das Filtergehäuse durch eine Dichtung in Form einer O-Ring-Dichtung abgedichtet wird, die zwischen einer Gehäusewand und einem Deckel des Filtergehäuses angeordnet ist. Dabei wird die Dichtung in eine axiale Nut mit konischem Querschnitt, die auf einem umlaufenden Bund des Deckels angeordnet ist, gelegt. Beim Schließen des Deckels drückt ein umlaufender Ring, der an der Gehäusewand angebracht ist, so auf die Dichtung, dass diese zusammengedrückt und in die konische Nut gepresst wird. Ein in der Nut liegender Ring sorgt für eine zusätzliche Verpressung der Dichtung. Auf diese Weise ist eine Abdichtung des Filtergehäuses gewährleistet. Durch das Pressen der Dichtung in die konische Nut beim Schließen des Deckels wird diese zusätzlich in ihrer Position fixiert. Wird bei der Montage die Dichtung in die Nut des Deckels eingelegt, ist jedoch nicht gewährleistet, dass diese während des Schließvorgangs des Deckels fest in ihrer Position verbleibt, da die Verpressung in die konische Nut erst beim Schließen des Deckels erfolgt. Auch nach dem Öffnen des Deckels bei einem Tausch eines Filterelements kann die Dichtung aus der Nut herausfallen und verloren gehen. Alternativ kann die Dichtung deshalb angeklebt werden.

Eine Aufgabe der Erfindung ist es daher, ein Filtersystem zu schaffen, welches es erlaubt, durch einfache und kostengünstige Maßnahmen eine zuverlässige und montagefreundliche Abdichtungsmöglichkeit des Filtersystems zu gewährleisten.

Die vorgenannten Aufgaben werden nach einem Aspekt der Erfindung gelöst mit einem Filtersystem, das eine zwischen einer Dichtfläche einer Gehäusewand und einer Dichtfläche eines Deckels angeordnete Dichtung umfasst. Dabei wird die Dichtung durch wenigstens ein Halteelement, welches an dem Deckel oder an der Gehäusewand angeordnet ist, in einer Längsrichtung in Position gehalten.

Günstige Ausgestaltungen und Vorteile der Erfindung ergeben sich aus den weiteren Ansprüchen, der Beschreibung und der Zeichnung.

### Offenbarung der Erfindung

Es wird ein Luftfiltersystem vorgeschlagen, wobei das Filtersystem ein Gehäuse mit Gehäusewand und wenigstens einem Deckel, einen am Gehäuse angeordneten Einlass zum Zuführen eines zu filternden Fluids, insbesondere Luft, einen am Gehäuse angeordneten Auslass zur Ableitung des gefilterten Fluids, wenigstens ein Filterelement, das zwischen Einlass und Auslass angeordnet ist und eine Rohseite von einer Reinseite trennt, sowie eine zwischen einer Dichtfläche der Gehäusewand und einer Dichtfläche des Deckels angeordnete Dichtung umfasst. Dabei wird die Dichtung durch wenigstens ein Halteelement, welches an dem Deckel oder an der Gehäusewand angeordnet ist, in einer Längsrichtung in Position gehalten.
Erfindungsgemäß nach einer ersten Alternative ist das wenigstens eine Halteelement radial außen auf einem Bund des Deckels angeordnet. Damit ist eine gute Zugänglichkeit beim Einlegen der Dichtung gegeben. Außerdem wird so auch eine Sichtkontrolle bei der Montage des Deckels mit eingelegter Dichtung ermöglicht.
In einer zweiten Alternative ist das wenigstens eine Halteelement auch radial außen auf einem Bund der Gehäusewand angeordnet. Dadurch kann eine ähnliche Lösung zur Fixierung der Position einer Dichtung wie oben beschrieben dargestellt werden. Es sind nur die Halteelemente und Gegenelemente wie Nuten zwischen Deckel und Gehäuse vertauscht.
Erfindungsgemäß dient der Bund gleichzeitig auch als radiale Dichtfläche für die eingelegte Dichtung.

Die erfindungsgemäße Lösung sieht vor, dass eine Dichtung, beispielsweise eine O-Ring-Dichtung, bei der Montage durch Halteelemente, beispielsweise in Form von Haltenocken, formschlüssig in ihrer Position gehalten wird, wodurch ein radiale Abdichtung des Filtergehäuses ermöglicht wird. Dies stellt einen Vorteil gegenüber dem Stand der Technik dar, bei dem Dichtungen für eine Gehäuseabdichtung angeklebt werden oder durch Kraftschluss bei der Montage in Position gehalten werden, wodurch nur eine axiale Abdichtung möglich ist.

Die Vorteile liegen in einer kostengünstigeren Lösung einer Verliersicherung gegenüber einer angeklebten Lösung, bzw. einer sichereren Lösung einer Verliersicherung bei einem eventuellen Tausch eines Filterelementes im Wartungsfall gegenüber einer kraftschlüssigen Lösung. Zusätzlich erlauben die Halteelemente der Dichtung als weitere Funktion einen Verdrehschutz des Deckels zur Gehäusewand. Das radiale Dichtungsprinzip ist zudem weniger anfällig gegenüber Toleranzschwankungen der Bauteile, als das axiale Dichtungsprinzip.

In einer zweckmäßigen Ausführungsform kann das wenigstens eine Halteelement in wenigstens eine Nut, welche auf einem äußeren Umfang der Gehäusewand angeordnet ist, so eingreifen, dass der Deckel axial verdrehsicher montierbar ist. Dies ist von großem Vorteil bei Filtersystemen, die unter Vibrationsbelastung beispielsweise an Brennkraftmaschinen in Kraftfahrzeugen eingesetzt werden, wo sich sonst beim Betrieb sowohl der Deckel als auch das Filterelement, das sich beispielsweise am Deckel abstützt, verdrehen können.

Vorteilhaft können auf einem radial inneren Bund der Gehäusewand zwei oder mehrere Rippen angeordnet sein, in welche das wenigstens eine Halteelement eingreift, wodurch ein axialer Verdrehschutz des Deckels darstellbar ist. Auf diese Weise wird ein zusätzlicher und kostengünstig herstellbarer Verdrehschutz des Deckels ermöglicht.

In einer weiteren vorteilhaften Ausgestaltung kann das wenigstens eine Halteelement als Ausrichtelement ausgebildet sein, welches in wenigstens eine, als entsprechendes Gegenelement ausgebildete, Nut, welche auf einem äußeren Umfang der Gehäusewand angeordnet ist, eingreift, sodass der Deckel axial winkelgerichtet montierbar ist. Dadurch kann der Deckel nur in einer Winkelposition montiert werden. Häufig ist außerdem bei der Montage das Filterelement ebenfalls winkelgerichtet montierbar dem Deckel zugeordnet, sodass dann das gesamte Filtersystem in einer eindeutigen Winkelposition der einzelnen Bauteile zueinander montierbar ist. Dadurch stellen sich beim Betrieb stabile und reproduzierbare Verhältnisse des Strömungsfeldes für das zu filternde Fluid ein. Auf diese Weise sind beispielsweise Messungen mit einem Heißfilmluftmassenmesser (HFM) zur Motorsteuerung in guter Qualität möglich. Solche Sensoren reagieren sonst empfindlich auf unterschiedliche Strömungsfelder durch unterschiedliche Strömungsgeometrien, die beispielsweise durch unterschiedliche Einbaulagen von Filterelementen, Stützrohren und Sekundärelementen zustande kommen können.

Korrespondierend dazu kann das wenigstens eine Halteelement in wenigstens eine Nut, welche auf einem äußeren Umfang des Deckels angeordnet ist, eingreifen, sodass der Deckel axial verdrehsicher montierbar ist. Auch diese Funktion ist dadurch in gleicher Weise wie zuvor beschrieben darstellbar.

Genauso können vorteilhafterweise auf einem radial inneren Bund des Deckels zwei oder mehrere Rippen angeordnet sein, in welche das wenigstens eine Halteelement eingreift, wodurch ein axialer Verdrehschutz des Deckels darstellbar ist.

In ähnlicher Weise kann das wenigstens eine Halteelement als Ausrichtelement ausgebildet sein, welches in wenigstens eine, als entsprechendes Gegenelement ausgebildete, Nut, welche auf einem äußeren Umfang des Deckels angeordnet ist, eingreift, sodass der Deckel axial winkelgerichtet montierbar ist.

Auch bei vertauschten Halteelementen und Gegenelementen von Deckel zur Gehäusewand und umgekehrt lassen sich die beschriebenen Funktionen zu einer Positionierung der Dichtung und des Deckels bei der Montage günstig darstellen.

Vorteilhaft kann die Dichtung das Gehäuse radial über die Dichtflächen an dem Bund des Deckels sowie dem Bund des Gehäuses abdichten. Dadurch, dass die Dichtung über das erfindungsgemäße Halteprinzip nicht axial gepresst wird, kann die Dichtung eine radiale Dichtungsfunktion ausführen, die bezüglich der Toleranzlagen bei der Montage sich als günstig erwiesen hat.

Zweckmäßigerweise kann jedoch über die zwei oder mehreren Rippen auch eine axiale Verpressung der Dichtung bewirkbar sein, wodurch das Gehäuse axial abgedichtet wird. Diese axiale Abdichtung kann zusätzlich zu einer radialen Abdichtung erfolgen, um einen weiteren Sicherheitsfaktor darzustellen.

In einer vorteilhaften Ausgestaltung kann das wenigstens eine Halteelement einstückig mit dem Deckel oder der Gehäusewand herstellbar sein. Günstigerweise wird beim Herstellen des Filtergehäuses, beispielsweise in einem Kunststoff-Spritzgussprozess, das Halteelement mit eingespritzt, sodass die gesamte Gehäusewand oder der Deckel in einem Prozess möglichst kostengünstig darstellbar ist. Zweckmäßigerweise werden die Halteelemente, die beispielsweise in Form von Haltenocken realisiert werden können, dabei spritzgussgerecht mit Touchierkanten zum Entformen nach Abschluss des Spritzgussprozesses gestaltet.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines zweistufigen Filtersystems mit einem Zyklonabscheider nach einem Ausführungsbeispiel der Erfindung, darge-stellt von der Seite des Auslassstutzens;
- Fig. 2: einen Längsschnitt durch ein Filtersystem nach einem Ausführungsbeispiel der Erfindung;
- Fig. 3: eine perspektivische Ansicht eines Deckels mit Halteelementen und eingelegter Dichtung nach einem Ausführungsbeispiel der Erfindung;
- Fig. 4: eine perspektivische Ansicht eines Deckels mit Halteelementen ohne Dichtung nach einem Ausführungsbeispiel der Erfindung;
- Fig. 5: eine Detailansicht eines Halteelements nach einem Ausführungsbeispiel der Erfindung; und
- Fig. 6: eine Detailansicht einer Gehäusewand mit Rippen und Nuten als Ausricht-elemente und Gegenelemente nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

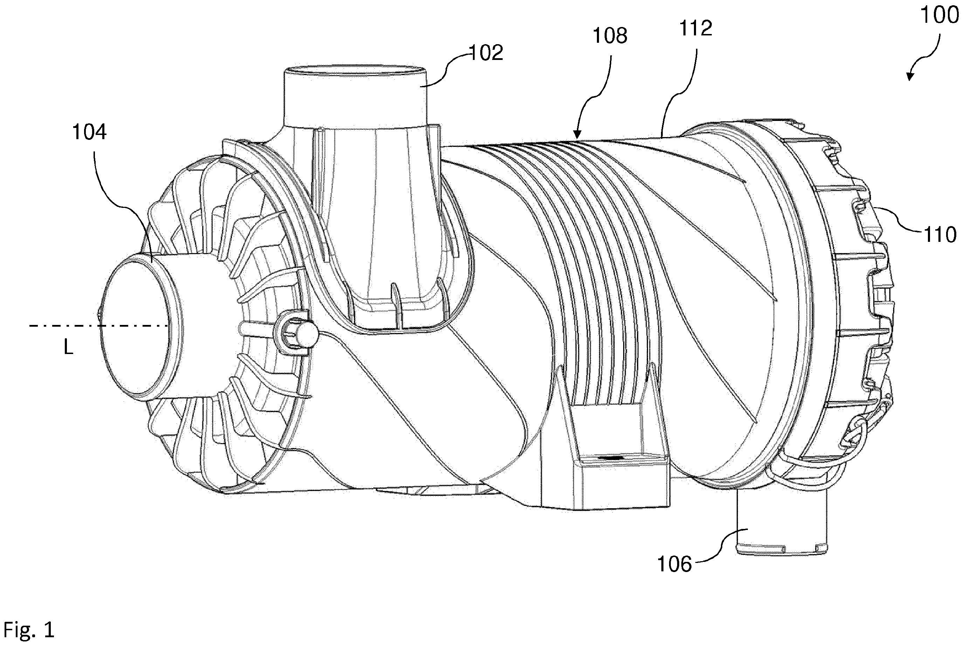

Figur 1 zeigt eine perspektivische Ansicht eines zweistufigen Filtersystems 100 mit einem Zyklonabscheider 36 nach einem Ausführungsbeispiel der Erfindung, dargestellt von der Seite des Auslasses 104, mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das eine Gehäusewand 112 aufweist und mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Derartige Filtersysteme, wie in Figur 1 dargestellt, werden üblicherweise als Luft- und/oder Partikelfilter insbesondere für Brennkraftmaschinen im Baumaschinen- und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

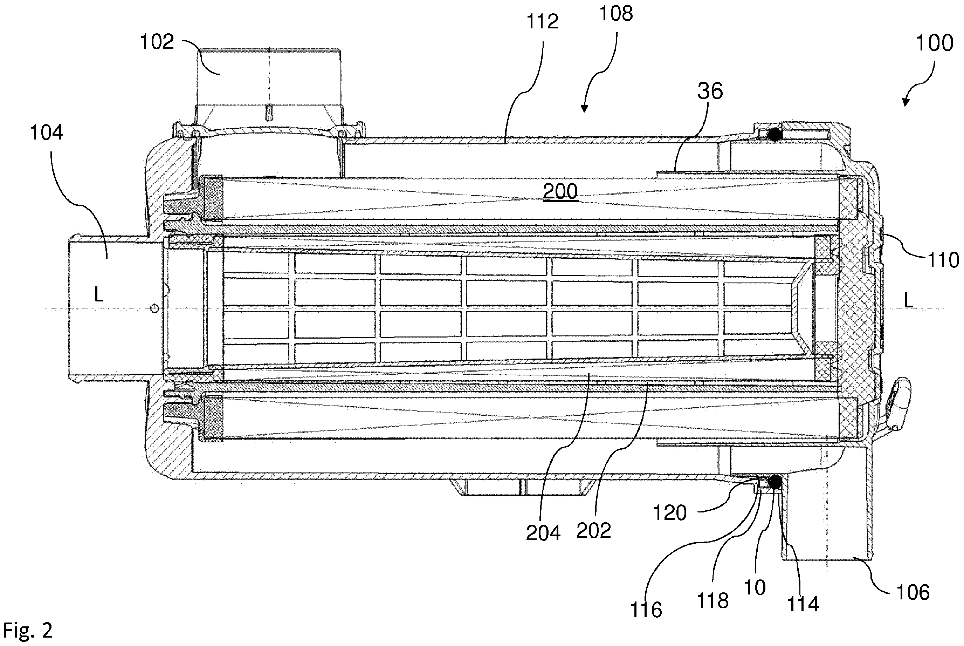

Figur 2 zeigt einen Längsschnitt durch ein Filtersystem 100 nach einem Ausführungsbeispiel der Erfindung. Das Filtersystem 100 umfasst dabei ein Gehäuse 108 mit Gehäusewand 112 und einem Deckel 110, einen am Gehäuse 108 angeordneten Einlass 102 zum Zuführen eines zu filternden Fluids, insbesondere Luft, einen am Gehäuse 108 angeordneten Auslass 104 zur Ableitung des gefilterten Fluids, ein Filterelement 200, das zwischen Einlass 102 und Auslass 104 angeordnet ist und eine Rohseite von einer Reinseite trennt, sowie eine zwischen einer Dichtfläche 114 der Gehäusewand 112 und einer Dichtfläche 116 des Deckels 110 angeordnete Dichtung 10. Dabei wird die Dichtung 10 durch wenigstens ein Halteelement 12, welches an dem Deckel 110 oder an der Gehäusewand 112 angeordnet ist, in einer Längsrichtung L in Position gehalten. Die Dichtfläche 114 der Gehäusewand 112 ist auf einem Bund 118, die Dichtfläche 116 des Deckels 110 ist auf einem Bund 120 angeordnet. Im Inneren des Filterelements 200 sind zentrisch zur Längsachse L ein Stützrohr 202, sowie ein Sekundärelement 204 angeordnet. Das Stützrohr 202 dient zur Versteifung und Abstützung des Filterelements 200, das Sekundärelement 204, das ebenfalls über ein Filtermedium verfügt, schützt den Reinluftbereich beim Austausch des Filterelements 200 vor eindringendem Schmutz und verbleibt beim Wechsel des Filterelements 200 im Filtersystem 100.

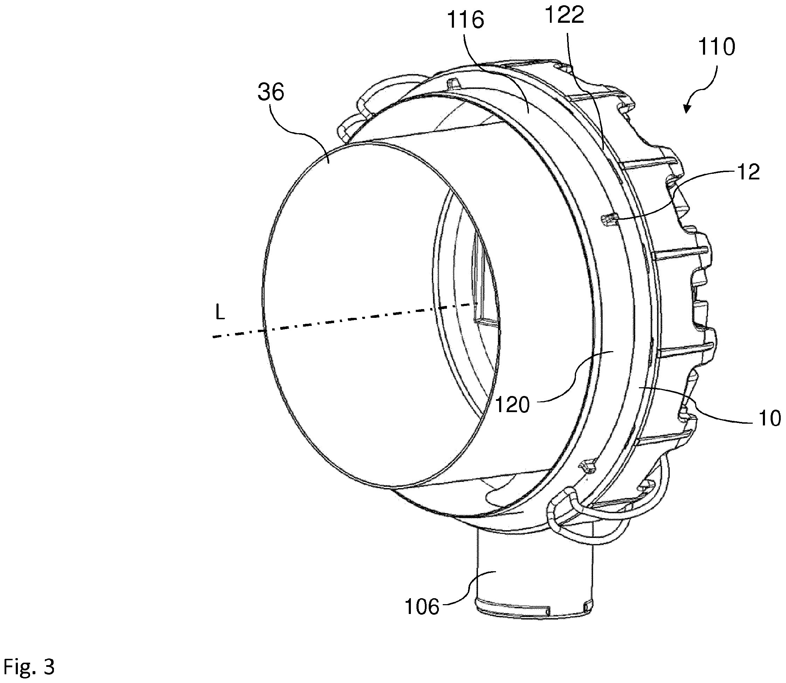

In Figur 3 ist eine perspektivische Ansicht eines Deckels 110 mit Halteelementen 12 und eingelegter Dichtung 10 nach einem Ausführungsbeispiel der Erfindung zu sehen. Die Halteelemente 12 sind radial außen auf einem Bund 120 des Deckels 110 angeordnet, der auch als Dichtfläche 116 für eine radiale Abdichtung des Gehäuses 108 durch die Dichtung 10 dient. Die Dichtung 10 ist über den Bund 120 und über die Halteelemente 12 geschoben und wird dann durch die Halteelemente 12 in axialer Längsrichtung L in Position gehalten. Der andere Anschlag der Dichtung ist der umlaufende Rand 122 des Deckels 110, der als Abschluss des Bunds 120 dient.

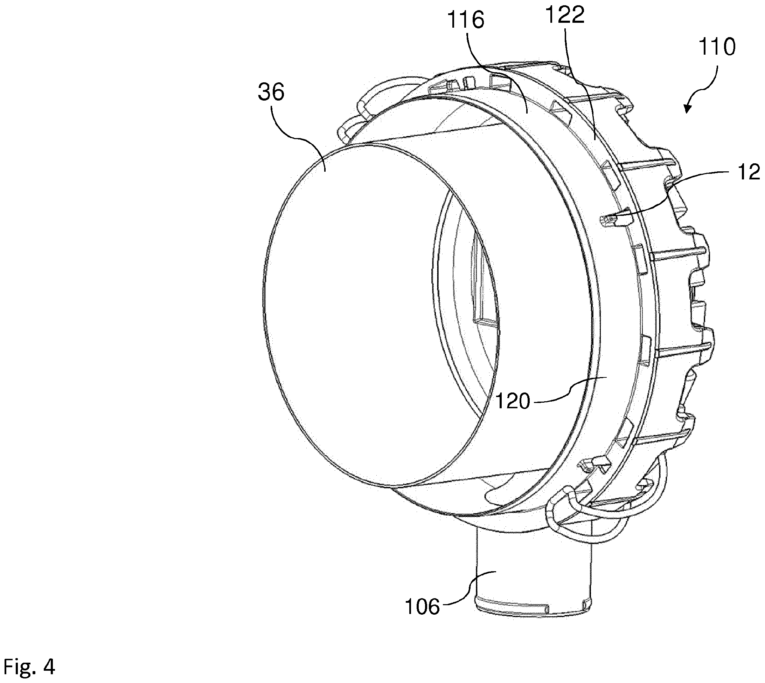

Figur 4 stellt dieselbe perspektivische Ansicht des Deckels 110 mit Halteelementen 12 ohne Dichtung 10 dar. Die Halteelemente 12 sind dabei in Form von Haltenocken realisiert, welche einen Durchmesser der Dichtung bis zum Rand 122 des Deckels 110 freilassen.

In einer alternativen Ausführungsform, die jedoch hier nicht dargestellt ist, kann das wenigstens eine Halteelement 12 auch radial außen auf einem Bund 118 der Gehäusewand 112 angeordnet sein. Dabei kann das wenigstens eine Halteelement 12 in wenigstens eine Nut 14, welche auf einem äußeren Umfang des Deckels 110 angeordnet ist, eingreifen, sodass der Deckel 110 axial verdrehsicher montierbar ist. Weiter können auf einem radial inneren Bund 120 des Deckels 110 zwei oder mehrere Rippen 16 angeordnet sein, in welche das wenigstens eine Halteelement 12 eingreift, wodurch ein axialer Verdrehschutz des Deckels 110 darstellbar ist. Weiter kann das wenigstens eine Halteelement 12 als Ausrichtelement 18 ausgebildet sein, welches in wenigstens eine, als entsprechendes Gegenelement 20 ausgebildete, Nut 14, welche auf einem äußeren Umfang des Deckels 110 angeordnet ist, eingreift, sodass der Deckel 110 axial winkelgerichtet montierbar ist.

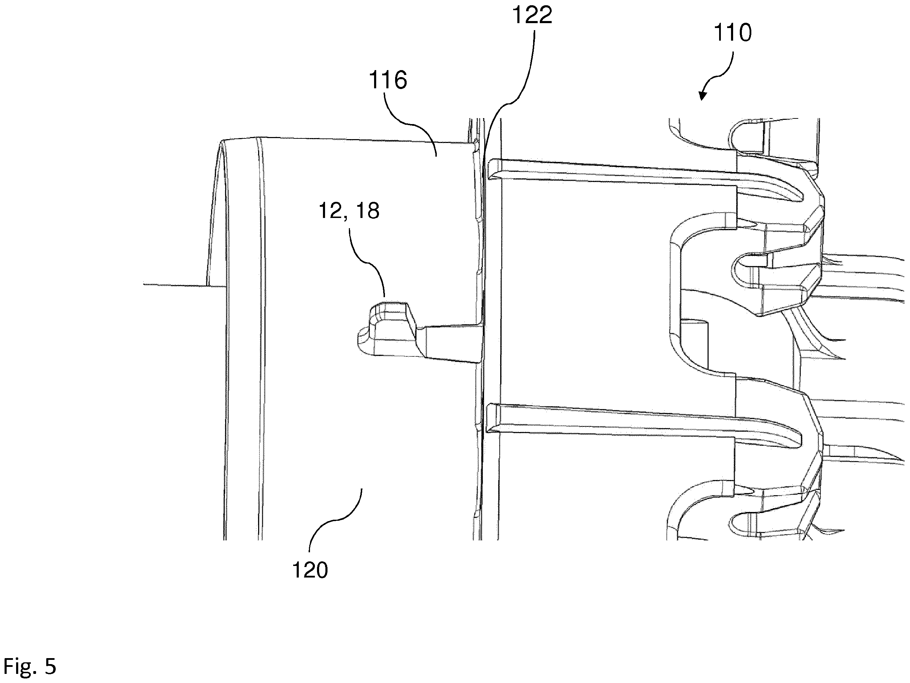

Figur 5 stellt eine Detailansicht eines Halteelements 12 nach einem Ausführungsbeispiel der Erfindung dar. Das Halteelement 12 in Form eines Haltenockens ist radial außen auf dem Bund 120 des Deckels 110 angeordnet, der gleichzeitig auch als radiale Dichtfläche 116 für die eingelegte Dichtung 10 dient. Das Halteelement 12 ist mit dem Deckel 110 in einem Spritzgussprozess hergestellt und so als typisches Spritzgussteil ausgebildet. Das Halteelement 12 weist in Richtung des Randes 122 des Deckels 110 eine Schräge auf, über welche die Dichtung 10 leicht eingelegt werden kann. Das wenigstens eine Halteelement 12 kann als Ausrichtelement 18 ausgebildet sein, welches in wenigstens eine, als entsprechendes Gegenelement 20 ausgebildete, Nut 14, welche auf einem äußeren Umfang der Gehäusewand 112 angeordnet ist, eingreift, sodass der Deckel 110 axial winkelgerichtet montierbar ist.

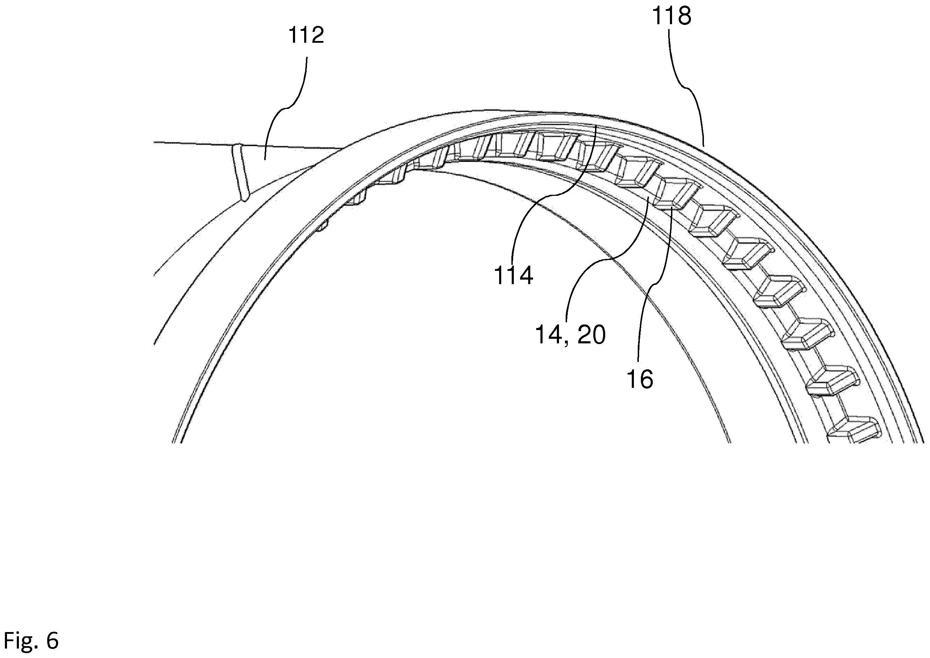

Figur 6 zeigt eine Detailansicht einer Gehäusewand 112 mit Rippen 16 und Nuten 14 als Gegenelemente 20 für Ausrichtelemente 18, die am Deckel 110 auf einem umlaufenden radial inneren Bund 118 angeordnet sind, nach einem Ausführungsbeispiel der Erfindung. Die Halteelemente 12 können in die Nuten 14 zwischen den Rippen 16 eintauchen und dienen so als Ausrichtelemente 18, um einen Verdrehschutz für den montierten Deckel 110 darzustellen. Dabei kann das wenigstens eine Halteelement 12 in wenigstens eine Nut 14 so eingreifen, dass der Deckel 110 axial verdrehsicher montierbar ist. Weiter kann über die zwei oder mehrere Rippen 16 eine axiale Verpressung der Dichtung 10 bewirkbar sein, wodurch das Gehäuse 108 zusätzlich zu der radialen Abdichtung über die beiden Dichtflächen 114, 116 an Gehäusewand 112 und Deckel 110 axial abgedichtet wird. Dadurch ist eine zusätzliche Sicherheit bei der Abdichtung des Filtersystems 100 zu erzielen.

## Patentansprüche

1. Luftfiltersystem (100) für eine Brennkraftmaschine, umfassend
- ein Gehäuse (108) mit Gehäusewand (112) und wenigstens einem Deckel (110),
- einen am Gehäuse (108) angeordneten Einlass (102) zum Zuführen eines zu filternden Fluids, insbesondere Luft,
- einen am Gehäuse (108) angeordneten Auslass (104) zur Ableitung des gefilterten Fluids,
- wenigstens ein Filterelement (200), das zwischen Einlass (102) und Auslass (104) angeordnet ist und eine Rohseite von einer Reinseite trennt,
- eine zwischen einer Dichtfläche (114) der Gehäusewand (112) und einer Dichtfläche (116) des Deckels (110) angeordnete Dichtung (10), die das Gehäuse (108) radial abdichtet,
wobei die Dichtung (10) durch wenigstens ein Halteelement (12), welches an dem Deckel (110) oder an der Gehäusewand (112) angeordnet ist, in einer Längsrichtung (L) in Position gehalten wird, wobei das wenigstens eine Halteelement (12) in Form wenigstens einer Haltenocke radial außen auf einem Bund des Deckels (110) oder der Gehäusewand angeordnet ist, wobei der Bund gleichzeitig auch als radiale Dichtfläche (116) für die eingelegte Dichtung (10) dient.

2. Luftfiltersystem nach Anspruch 1, wobei auf einem radial inneren Bund (118) der Gehäusewand (112) zwei oder mehrere Rippen (16) angeordnet sind, in welche das wenigstens eine Halteelement (12) eingreift, wodurch ein axialer Verdrehschutz des Deckels (110) darstellbar ist.

3. Luftfiltersystem nach Anspruch 1, wobei auf einem radial inneren Bund (120) des Deckels (110) zwei oder mehrere Rippen (16) angeordnet sind, in welche das wenigstens eine Halteelement (12) eingreift, wodurch ein axialer Verdrehschutz des Deckels (110) darstellbar ist.

4. Luftfiltersystem nach Anspruch 1 oder 3, wobei das wenigstens eine Halteelement (12 als Ausrichtelement (18) ausgebildet ist, welches in wenigstens eine, als entsprechendes Gegenelement (20) ausgebildete, Nut (14), welche auf einem äußeren Umfang des Deckels (110) angeordnet ist, eingreift, sodass der Deckel (110) axial winkelgerichtet montierbar ist.

5. Luftfiltersystem nach einem der vorhergehenden Ansprüche 2 oder 3, wobei über die zwei oder mehrere Rippen (16) eine axiale Verpressung der Dichtung (10) bewirkbar ist, wodurch das Gehäuse (108) axial abgedichtet wird.

6. Luftfiltersystem nach einem der vorhergehenden Ansprüche, wobei das wenigstens eine Halteelement (12) einstückig mit dem Deckel (110) oder der Gehäusewand (112) herstellbar ist.

## Claims

1. Air filter system (100) for an internal combustion engine, comprising
- a housing (108) with housing wall (112) and at least one cover (110),
- an inlet (102) disposed at the housing (108) for supplying a fluid to be filtered, in particular air,
- an outlet (104) disposed at the housing (108) for discharging the filtered fluid,
- at least one filter element (200) that is disposed between inlet (102) and outlet (104) and separates a raw side from a clean side,
- a seal (10) disposed between a sealing surface (114) of the housing wall (112) and a sealing surface (116) of the cover (110) which seals the housing (108) radially,
wherein the seal (10) is held in position in a longitudinal direction (L) by at least one holding element (12) which is disposed at the cover (110) or at the housing wall (112), wherein the at least one holding element (12) is disposed in the shape of at least one retaining cam radially outside on a collar of the cover (110) or of the housing wall, wherein the collar concurrently also serves as radial sealing surface (116) for the inserted seal (10).

2. Air filter system according to claim 1, wherein on a radially inner collar (118) of the housing wall (112) two or several ribs (16) are disposed, into which the at least one holding element (12) engages so that an axial anti-rotation device of the cover (110) is possible.

3. Air filter system according to claim 1, wherein on a radially inner collar (120) of the cover (110) two or several ribs (16) are disposed, into which the at least one holding element (12) engages so that an axial anti-rotation device of the cover (110) is possible.

4. Air filter system according to claim 1 or 3, wherein the at least one holding element (12) is designed as alignment element (18) which engages into at least one groove (14) designed as corresponding counterpart (20) which is disposed at an outer circumference of the cover (110) so that the cover (110) can be axially mounted in a correct angle position.

5. Air filter system according to one of the above claims 2 or 3, wherein via the two or several ribs (16) an axial pressing of the seal (10) can be performed so that the housing (108) is axially sealed.

6. Air filter system according to one of the above claims, wherein the at least one holding element (12) is producible in one piece with the cover (110) or the housing wall (112).

## Revendications

1. Système de filtre à air (100) pour un moteur à combustion interne, comprenant
- un boîtier (108) avec une paroi de boîtier (112) et au moins un couvercle (110),
- une entrée (102) disposée sur le boîtier (108) et destinée à introduire un fluide à filtrer, en particulier de l'air,
- une sortie (104) disposée sur le boîtier (108) et destinée à évacuer le fluide filtré,
- au moins un élément filtrant (200) qui est disposé entre l'entrée (102) et la sortie (104) et qui sépare un côté brut d'un côté pur,
- un joint d'étanchéité (10) disposé entre une surface d'étanchéité (114) de la paroi de boîtier (112) et une surface d'étanchéité (116) du couvercle (110), lequel joint étanche radialement le boîtier (108),
le joint d'étanchéité (10) étant maintenu dans sa position, dans un sens longitudinal (L), par au moins un élément de maintien (12) qui est disposé sur le couvercle (110) ou sur la paroi de boîtier (112), l'élément de maintien (12), au moins au nombre d'un, exécuté sous forme d'au moins une came de maintien étant disposé, à l'extérieur en sens radial, sur un épaulement du couvercle (110) ou de la paroi du boîtier, l'épaulement servant aussi simultanément de surface d'étanchéité (116) radiale pour le joint d'étanchéité (10) inséré.

2. Système de filtre à air selon la revendication 1, deux ou plusieurs nervures (16) étant disposées sur un épaulement (118) radialement intérieur de la paroi de boîtier (112), dans lesquelles s'engrène l'élément de maintien (12), au moins au nombre d'un, ce qui permet de former une protection antitorsion axiale du couvercle (110).

3. Système de filtre à air selon la revendication 1, deux ou plusieurs nervures (16) étant disposées sur un épaulement (120) radialement intérieur du couvercle (110), dans lesquelles s'engrène l'élément de maintien (12), au moins au nombre d'un, ce qui permet de former une protection antitorsion axiale du couvercle (110).

4. Système de filtre à air selon la revendication 1 ou 3, l'élément de maintien (12), au moins au nombre d'un, étant exécuté en tant qu'élément de positionnement (18) qui s'engrène dans au moins une rainure (14) exécutée en tant que contre-élément (20) correspondant et disposée sur une circonférence extérieure du couvercle (110), de sorte que le couvercle (110) puisse être monté en sens axial avec l'angle exact.

5. Système de filtre à air selon l'une des revendications 2 ou 3 précédentes, une pression axiale du joint d'étanchéité (10) pouvant être exercée par le biais des deux ou de plusieurs nervures (16), ce qui étanche le boîtier (108) en sens axial.

6. Système de filtre à air selon l'une des revendications précédentes, l'élément de maintien (12), au moins au nombre d'un, pouvant être fabriqué en un seul bloc avec le couvercle (110) ou la paroi de boîtier (112).
